# EUROPÄISCHE PATENTSCHRIFT

(11) **EP 2 010 985 B1**
(45) Veröffentlichungstag und Bekanntmachung des Hinweises auf die Patenterteilung: **21.07.2010**
(21) Anmeldenummer: 07723862.4
(22) Anmeldetag: 31.03.2007
(51) Int. Cl.: G05G 1/08, G05G 5/04, G05G 5/06, G06F 3/033

(54) **STEUERUNG FÜR EINE BEDIENEINHEIT**
CONTROLLER FOR AN OPERATING UNIT
COMMANDE POUR UNE UNITE DE COMMANDE

(30) Priorität: 21.04.2006 DE 102006018522
(43) Veröffentlichungstag der Anmeldung: 07.01.2009
(73) Patentinhaber: Preh GmbH, 97616 Bad Neustadt a. d. Saale (DE)
(72) Erfinder: KRAMLICH, Andreas, 97424 Schweinfurt (DE); NAUTH, Jürgen, 97705 Stangenroth (DE)
(74) Vertreter: Bauer, Wulf
(86) Internationale Anmeldenummer: PCT/EP2007/002921
(87) Internationale Veröffentlichungsnummer: WO 2007/121830

(56) Entgegenhaltungen:
- EP-A- 0 961 305
- EP-A- 1 462 916
- WO-A-2005/027352
- WO-A-2005/047824
- US-A- 4 394 889

## Beschreibung

Die vorliegende Erfindung betrifft eine Bedieneinheit nach dem Oberbegriff des Patentanspruchs 1.

Eine derartige Bedieneinheit ist aus der EP 0 961 305 A2 bekannt.

Derartige Bedieneinheiten werden in Kraftfahrzeugen eingesetzt, wenn mittels einer Bedieneinrichtung unterschiedliche Funktionen steuerbar sind. Häufig ist es in Kraftfahrzeugen notwendig, einem Bedienelement unterschiedliche Funktionen zuzuweisen, wenn beispielsweise das Kraftfahrzeug ein Display aufweist, in den unterschiedlichste Bedienfunktionen angezeigt und auswählbar sind. So kann eine mit wenigen Stufen ausgestaltete Lüfterregulierung und eine mit vielen Stufen versehene Lautstärkeregelung mittels einer Bedieneinheit, die beispielsweise ein Bedienknopf, ein Drehteller oder ein Bedienelement ist, einzustellen sein.

Um diese vielfachen Funktionen und Einstellungen in einer Bedieneinheit für den Bediener haptisch erkennbar zu gestalten, ist aus der unveröffentlichten DE 10 2005 042 883 eine Blockiervorrichtung bekannt, mittels der eine individuelle Erzeugung von Endanschlägen an unterschiedlichsten Positionen einer Betätigungsvorrichtung darstellbar ist. Dieser Stand der Technik beschreibt die Anordnung einer Kugel in einer Nut, die mittels eines Elektromagneten positionierbar und mittels eines Permanentmagneten in ihre Ursprungsposition bewegbar ist. Hierbei rastet die Kugel in eine Verzahnung, des zweiten Teils, das relativ zur Nut bewegbar ist, durch die Aktivierung des Elektromagneten in die Verzahnung ein. Dabei verklemmt sich die Kugel zwischen der Verzahnung und der Nut und erzeugt dadurch eine für den Bediener haptisch erfassbare Begrenzung der Drehbewegung des Bedienelementes. Informationen über die Ansteuerung der Elektromagnete können der Druckschrift nicht entnommen werden.

Ein Beispiel für ein Wegmesssystem zur Erfassung einer Drehbewegung eines Bedienelementes einer Bedieneinheit in einem Kraftfahrzeug ist in der DE 103 42 326 A1 beschrieben. Beschrieben ist ein Drehschalter bestehend aus einem Bedienelement, einer auf einer Leiterplatte angeordneten Lichtemissionseinrichtung und einem ebenfalls auf der Leiterplatte angeordneten das Licht auswertenden Empfänger, wobei die Lichtemissionseinrichtung und der Empfänger in der Weise angeordnet sind, das eine optoelektronische Erfassung von Schaltstellungen des Drehschalters ermöglicht ist, wobei die Lichtemissionseinrichtung im Inneren einer hohlzylinderförmigen Verlängerung des Bedienelementes, radial nach aussen gerichtet befestigt ist und die Verlängerung in Höhe der Lichtemissionseinrichtung regelmässig am Umfang verteilte Öffnungen aufweist und gegenüber der Lichtemissionseinrichtung, an der Aussenseite der Verlängerung mindestens zwei Empfänger angeordnet sind. Ein derartiger Winkelgeber ist in verschiedensten Ausführungsvarianten in Bedieneinheiten einsetzbar und je nach Anzahl der Öffnungen in der Verlängerung, sind unterschiedlichste Auflösungen in Bezug auf den Winkel des Verdrehens der Bedieneinheit detektierbar. Auf den Einsatz derartiger Winkelgeber wird hiermit ausdrücklich Bezug genommen, da derartige Wegmesssysteme als Winkelgeber in der erfindungsgemässen Bedieneinheit einsetzbar sind.

Ein weiteres Beispiel für einen optischen Absolutwertgeber ist in der DE 103 53 429 A1 beschrieben.

Die in den zitierten Druckschriften genannten Winkelgeber stehen beispielhaft für inkrementale und absolute Winkelgeber, die in Erfindung einsetzbar sind. Darüber hinaus ist es natürlich selbstverständlich möglich bekannte Winkelgeber in einer erfindungsgemässen Bedieneinheit einzusetzen.

Aufgabe der Erfindung ist es, eine Bedieneinheit bereitzustellen, mit der ein sicheres Betätigen einer Aktuatorik, das heisst einer Blockiereinrichtung, in Abhängigkeit einer Relativbewegung zweier gegeneinander bewegten Teile einer Bedieneinheit ermöglicht wird.

Die erfindungsgemässe Aufgabe wird gelöst durch die Merkmale des Anspruchs 1.

Durch die erfindungsgemässe Ausgestaltung der Bedieneinheit ist nun die Möglichkeit geschaffen, eine Bedieneinheit mit einer Blockiereinrichtung zu versehen, die ein verzögerungsfreies Einrasten einer Kugel in eine zwischen dem ersten Teil und dem zweiten Teil befindlichen Blockierposition zu ermöglichen. Hierbei wird die Aktuatorik je nach Relativbewegung zwischen erstem und zweitem Teil so weit oder kurz vor der eigentlichen Blockierposition angesteuert, dass die Blockiereinrichtung genau im richtigen Moment aktiviert wird, um in die Mittel zum Blockieren in die ausgewählte Position einklemmen zu können, so dass ein Überfahren einer Rast - beziehungsweise einer Blockierposition - vermieden wird. Durch den Einsatz eines Winkelgebers, der unmittelbar mit der Auswerteelektronik und der Aktuatorik zusammenwirkt, ist es nun möglich die Aktuatorik in Abhängigkeit der Drehbewegung, das heißt dynamisch in die Blockierposition zu bewegen.

Ist das relativ zum ersten Teil bewegliche zweite Teil mit einer Verzahnung versehen, so ist es vorteilhaft, wenn die Auflösung des Winkelgebers mit der Anzahl der Blockierpositionen der Aktuatorik übereinstimmt. Ein weiterer Vorteil ergibt sich dann, wenn die Auflösung des Winkelgebers ein Vielfaches der Anzahl der Blockierpositionen ist. In Bezug auf ein Vielfaches ist es besonders vorteilhaft ein ganzzahliges Vielfaches, wie ein zweifaches, dreifaches, vierfaches, etc., der Anzahl der Blockierpositionen als Auflösung im Winkelgeber auszubilden. Anzumerken bleibt hier noch, dass auf die Ausgestaltungsvarianten der DE 10 2005 042 883 unmittelbar Bezug genommen wird.

Nachfolgend wird die Erfindung anhand von Figuren in einem Ausführungsbeispiel näher erläutert. Es zeigt
- Figur 1: den Schnitt durch eine prinzipielle Darstellung einer einseitig wirkenden Blockier- einrichtung, mit einer prinzipiell angedeuteten Auflösung eines Winkelgebers,
- Figur 2: eine prinzipielle Darstellung einer erfindungsgemäßen Blockiereinrichtung in einer Bedieneinheit,
- Figur 3: eine erfindungsgemäße Blockiereinrichtung in einer Stellung, in der das zweite Teil blockiert ist,
- Figur 4: ein schematisches Schaltbild und
- Figur 5: einen Spannungs- und Kräfteverlauf an der Bedieneinheit beziehungsweise in der Auswerteelektronik.

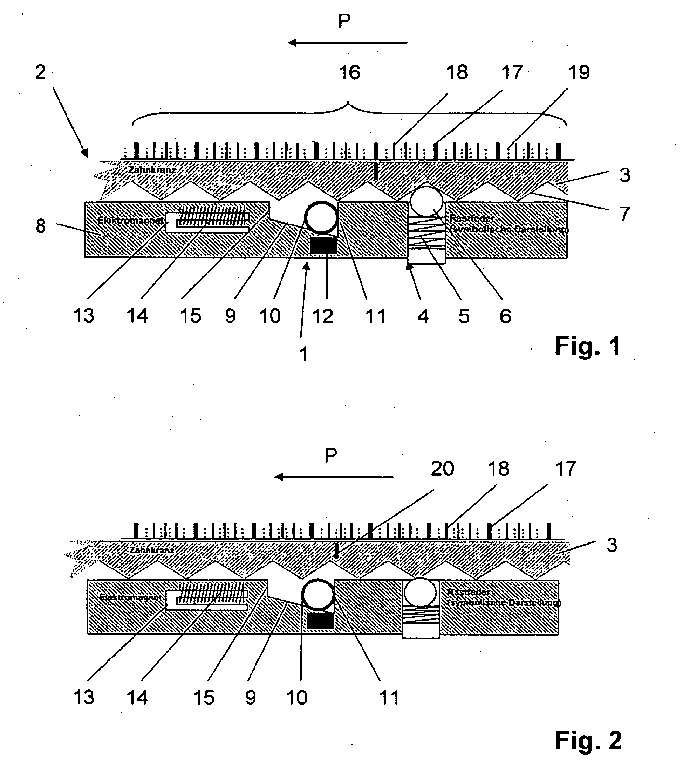

Die Figuren 1 bis 3 zeigen eine prinzipielle Darstellung einer Aktuatorik 1 für einen Endanschlag für das Rechtsdrehen, als Blockiereinrichtung 1, die Teil eines Bedienelementes 2 ist. Da gattungsgemäße Bedieneinheiten 2 vornehmlich als Drehsteller ausgebildet sind, ist es erfindungsgemäß natürlich vorstellbar, dass der Zahnkranz 3, der in diesen Ausführungsbeispielen das zweite Teil 3 bildet am Umfang eines Drehstellers der Bedieneinheit 2 angeordnet ist. Derartige Bedienelemente 2 sind mit einer Rasteinrichtung 4 versehen, die in diesen Ausführungsbeispiel aus einer Rastfeder 5 und einer Kugel 6 gebildet ist. Diese Rasteinrichtung 4 erzeugt für den Bediener eine Rast, die je nach Anzahl der Zähne 7 im Zahnkranz 3 eine entsprechende haptische Rückmeldung an den Bediener des Bedienelementes 2 liefert. Es ist natürlich selbstverständlich das auch andere Rasteinrichtungen 4 in Kombination mit einem zweiten Teil 3 einsetzbar sind.

Im ersten Teil 8 ist neben der Rasteinrichtung 4 eine Nut 9 vorgesehen, in der eine Kugel 10 beweglich und führbar eingelegt ist. Am unteren Ende 11 der Nut 9 ist im ersten Teil 8 ein Permanentmagnet 12 eingebaut. In der in der Figur 1 dargestellten Ruhestellung des Bedienelementes 2 wird die Kugel 10 durch den Permanentmagneten 12 in der Ruheposition, das heißt am unteren Ende 11 der Nut 9 gehalten. Darüber hinaus enthält das erste Teil 8 einen Elektromagneten 13, der eine Spule 14 aufweist. Durch eine Aktivierung, das heißt eine Beaufschlagung der Spule 14 mit einer Spannung, ist die Kugel 10 in der Nut 9 vom unteren Ende 11 in eine Position am oberen Ende 15 der Nut 9 bewegbar. Hierbei ist es natürlich selbstverständlich, dass die Kugel 10 zumindest teilweise aus einem magnetisierbaren Werkstoff besteht. Die Figur 1 beschreibt die Bedieneinheit in einer Ruhestellung und zeigt gleichzeitig ein System, mit einer Blockierfunktion als Aktuatorik, in dem das zweite Teil in der Figur 1 nach links bewegt blockierbar ist. Bei einer Blockierung für nach rechts bewegte zweite Teile müsste die Anordnung im Bedienelement 2 entsprechend spiegelbildlich aufgebaut sein. Alternativ besteht natürlich ebenfalls die Möglichkeit eine beidseitig mit schrägen versehene Nut 9, wie aus dem Stand der Technik bekannt, einzusetzen.

Oberhalb des Zahnkranzes 3 sind prinzipiell die Schaltschwellen 16 mit Hauptrasten 17 und zwischen Inkrementen 18 dargestellt. Die Hauptrasten die als breitere Striche 17 dargestellt sind entsprechen in ihrem Abstand dem Abstand der Zähne 7 im Zahnkranz 3 und somit der Rast. Das Beispiel entspricht einer Ausgestaltungsform gemäß den Unteransprüchen. Entsprechend den Unteransprüchen ist in diesem Ausführungsbeispiel ein dreifaches Vielfaches der Hauptrasten, das heißt der Auflösung des Winkelgebers, als Zwischeninkremente 18 ausgebildet und eingezeichnet. Darüber hinaus ist ein beliebiges Vielfaches der Hauptrast 17 als Zwischeninkremente 19, wie in dem Ausführungsbeispiel mit der strichpunktierten Linie angedeutet realisierbar.

Wird nun der Zahnkranz 3 in Richtung des Pfeils P, in der Figur 1 nach links bewegt, wobei ein Drehsteller nach rechts verdreht werden würde, so detektiert der Winkelgeber zwischen den Hauptrasten 17 drei Zwischeninkremente 18, so dass zwischen jedem Zahn 7 des Zahnkranzes 3 vier ansteuerbare Impulse, zum Beispiel mittels einer opto-elektronischen Erfassung, detektierbar sind. Somit kann eine sehr genaue Ansteuerung der Bewegung der Kugel 10 in der Nut 9 in Bezug auf die Bewegung des Zahnkranzes 3 erfolgen.

Vorteilhaft ist hierbei das die Bewegung der Kugel in der Nut 9 dynamisch, das heißt in Abhängigkeit der Drehgeschwindigkeit des zweiten Teils ansteuerbar ist. Eine hohe Auflösung, durch eine große Auflösung der Zwischeninkremente 18 zwischen den Hauptrasten 17 erzeugt eine hohe Anzahl von Impulsen, die wiederum in Signale zur Ansteuerung der Spule 14 des Elektromagneten umwandelbar sind. Mittels einer erfindungsgemäß ausgestalteten Bedieneinheit ist die Einschaltschwelle dynamisch an die Relativbewegung zwischen erstem Teil 8 und zweitem Teil 3 anpaßbar.

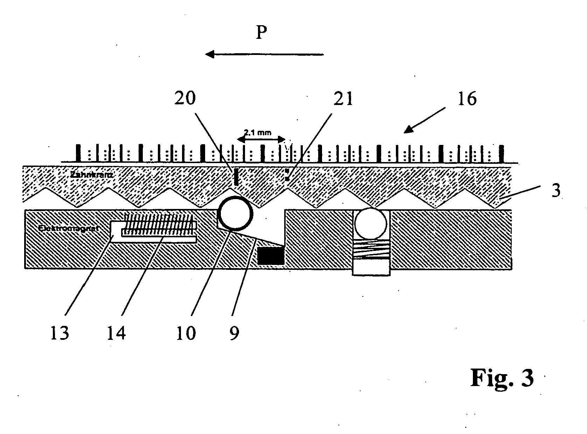

Wird nun der Zahnkranz 3 in Richtung des Pfeils P bewegt, wie in der Figur 2 dargestellt, so ist einerseits über die Zeit zur Erfassung der einzelnen Inkremente 17, 18 der opto-elektronischen Mittel die Drehgeschwindigkeit des Zahnkranzes 3 ermittelbar, so dass in Abhängigkeit der Drehgeschwindigkeit des Zahnkranzes 3 die Spule 14 des Elektromagneten 13 aktivierbar ist. Wird der Zahnkranz 3 sehr schnell bewegt, muss ein frühzeitiges, weit vor der Blockierposition erfolgtes Aktivieren der Spule die Kugel 10 aus dem unteren Ende der Nut heraus bewegen, um kein Überfahren einer Rast im Zahnkranz 3 zu ermöglichen. Wird hingegen der Zahnkranz 3 langsam bewegt, so ist ein späteres, kurz vor der Blockierposition erfolgtes Aktivieren der Spule 14 ausreichend, um die Kugel 10 in das obere Ende der Nut zu bewegen und somit die Blockierung des Zahnkranzes 3 und damit der Relativbewegung zu bewerkstelligen. Es ist somit die Möglichkeit geschaffen, die Zeiten des Aufbaus der Induktivitäten in dem Elektromagneten zeitlich in Bezug auf die Drehbewegung des Zahnkranzes zu berücksichtigen. Wird der Zahnkranz 3 langsam bewegt, so kann beispielsweise lediglich die halbe Spannung auf die Spule geschaltet werden, so dass sich die Kugel 10 langsamer an das obere Ende der Nut 10 bewegt. Wird hingegen eine schnelle Bewegung am Zahnkranz 3 mittels der Inkremente 17, 18 detektiert, so wird die maximale Spannung auf die Spule 14 des Elektromagneten 13 gegeben und die Kugel 10 bewegt sich sehr schnell an das obere Ende 15 der Nut 10 wie in Figur 3 dargestellt. Die Kugel 10 blockiert in dieser Stellung die Bewegung des Zahnkranzes 3 nach links, also einer Verdrehrichtung nach rechts.

Beispielhaft ist in der Figur 2 ein Strich 20 eingetragen, bei dem die Spule 14 aktiviert wird und in der Figur 3 ist der Weg mit einer strichpunktierten Linie 21 markiert, den der Zahnkranz 3 nach der Aktivierung zurücklegt. Beispielhaft ist in Figur 3 ein Weg von 2,1 mm dargestellt. Diese Länge entspricht in etwa auch dem Abstand zwischen den Zähnen 7.

Die Drehgeschwindigkeit wird hierbei mit einem optischen Sensor, der beispielsweise eine Gabellichtschranke sein kann, erfasst. Eine in diesem optischen System befindliche Codierscheibe ist dabei so ausgelegt, das eine n-fache Auflösung, das heißt ein Vielfaches der Hauptrasten 17 auswertbar ist. Hierdurch ist es möglich, die Drehgeschwindigkeit genau zu erfassen. Die Blockierfunktion wird dann zum Beispiel über eine Kugel 10, die über einen Elektromagneten 13 anziehbar ist und einen Zahnkranz 3 blockiert. In Abhängigkeit von der Drehgeschwindigkeit wird diese Blockierelement 3 dynamisch, das heißt angepasst angesteuert. Bei niedrigen Drehgeschwindigkeiten wird die Blockierfunktion später aktiviert. Bei höheren Drehgeschwindigkeiten muss die Blockierfunktion früher aktiviert werden, da sonst wegen der Kugelträgheit und dem Aufbau der Induktivitäten in der Spule der Zahnkranz 3 zu spät blockiert würde. Es ist somit eine dynamische Anpassung der Drehblockierung in einer zentralen Bedieneinheit realisierbar. Wird beispielsweise ein üblicher den Rasten entsprechender Encoder im Winkelgeber verwendet, der 36 Hauptrasten 17 aufweist, so es ist erfindungsgemäße vorstellbar, pro mechanischer Rast zwei Schaltpunkte zu realisieren, in dem zwischen jede Hauptrast 17 ein Zwischeninkrement 18 installiert wird, so dass die Auflösung des optischen Encoders von 36 auf 72 erfolgt.

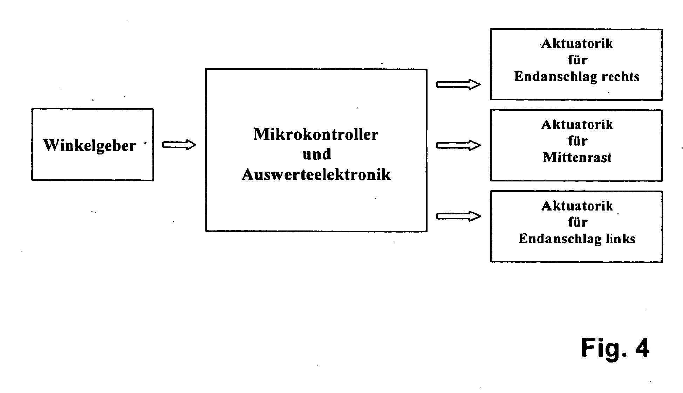

In der Figur 4 ist ein schematisches Schaltbild wiedergeben, welches das Zusammenspiel zwischen dem Winkelgeber, der Auswertelektronik und der Aktuatorik wiedergibt. Als Winkelgeber sind hierbei beliebige Winkelgeber einsetzbar, wobei Winkelgeber, die nach den Prinzip der optoelektronischen Erfassung ausgebildet sind, bevorzugt eingesetzt werden. Hierbei ist die Anzahl der Winkelgeber nicht beschränkt, so dass erfindungsgemäß auch eine Überlagerung der Signale von Winkelgebern in dem Mikrocontroller der Auswertelektronik vorstellbar ist. Die von Winkelgeber, zum Beispiel als Impulse generierten Relativbewegungen des ersten 8 und zweiten 3 Teils werden von der Auswerteelektronik erfasst und einer Hauptrast 17 oder den Inkrementen 18, 19 zugeordnet. Vorstellbar ist es nun, damit die Aktuatorik 1 in die richtige Stelle des Zahnkranzes 3 hineinbewegt wird, eine Auflösung im Winkelgeber derart zu wählen, das hier lediglich Hauptrasten 17, die beispielsweise den einzelnen Zähnen 7 entsprechen, auszuwerten und je nach Relativbewegung eine kurz vor der Blockierposition detektierte Rast 17, 18, 19 anzusteuern oder bei einer hohen Relativbewegung eine weit vor der ausgewählten Blockierposition detektierte Rast 17, 18, 19 zur Ansteuerung der Aktuatorik 1 anzusteuern. Durch den erfindungsgemäßen Aufbau der Bedieneinheit in Kombination mit Winkelgeber, Auswerteelektronik und Aktuatorik 1 ist nun die Möglichkeit geschaffen, dynamisch, das heißt in Abhängigkeit der Relativbewegung die Einschaltschwelle für die Aktuatorik anzusteuern. Wird nun erfindungsgemäß die Auflösung des Winkelgebers um ein Vielfaches der Hauptrasten erhöht, so erhöht sich die Ansprechgenauigkeit und somit die Steuerung der Aktuatorik 1.

Wie in der Figur 4 weiterhin dargestellt, ist es erfindungsgemäß vorstellbar mittels der Aktuatorik einen Endanschlag für rechts, eine Mittenrast und/oder einen Endanschlag für links zu realisieren. Wesentlich hierbei ist, dass je nach ausgewähltem Menüpunkt die Bedieneinheit für unterschiedliche Funktionen einsetzbar ist. Wird beispielsweise die Bedieneinheit 2 für die Lüftungsregelung eingesetzt, so ist es vorstellbar, dass diese Lüftung drei Stufen aufweist. Die Stufen der Lüftung können beispielsweise jeweils fünf Hauptrasten 17 voneinander beabstandet sein. Die Auswertelektronik, beziehungsweise der hierin befindliche Mikrocontroller, legt hierin die Position 0 mit einem Endanschlag, die Positionen 1 und 2 mit einem Mittenrast und die Position 3 mit einem Endanschlag fest. Will nun der Bediener die Lüftung von Stufe 1 auf die Stufe 3 bewegen, so ist in der Auswerteelektronik erkennbar, dass beim Erreichen der Stufe 3 zehn Rasten zu verfahren sind. Je nach Geschwindigkeit des Verdrehens des Drehstellers der Bedieneinheit 2 muß nun die Auswertelektronik das Steuersignal zur genauen Erreichung des Endanschlags der Stufe 3 früher oder später erfolgen. Wird der Drehsteller sehr schnell bewegt, so legt die Auswerteelektronik die Einschaltschwelle auf ein Inkrement 18 weit vor der eigentlich zu erreichenden Blockierposition, so dass die Blockierposition in der Schaltstufe 3 eindeutig einer Stellung des Drehstellers zugeordnet ist. Entsprechend wird ein sehr viel näher an der Blockierposition befindliches Inkrement 18 oder eine Hauptrast 17 ausgewählt, wenn der Bediener des Bedienelementes 2 den Drehsteller langsam bewegt. Diese dynamische Anpassung der Auswahl der Einschaltschwelle der Aktuatorik 1 bietet den erfindungsgemäßen Vorteil, dass die Blockierposition stets eindeutig zugeordnet wird. Ein Überfahren einer Blockierposition wird somit ausgeschlossen.

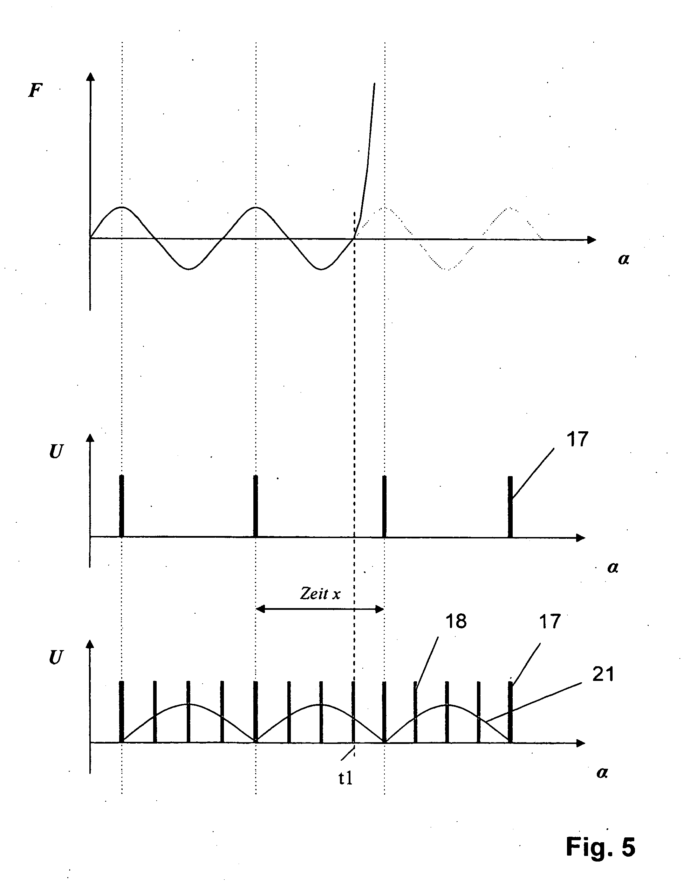

Die Figur 5 zeigt in ihrem obersten ersten Diagramm den Kraftverlauf an einem Drehsteller in einem Bedienelement 2 als nahezu sinusförmig auf. Die punktierten Linien, die sich vom oberen ersten Diagramm über das zweite mittlere Diagramm und das dritte untere Diagramm erstrecken, zeigen, die Position der Kugel 6 in der in Figur 1 gezeigten Position. Hierbei ist die Hauptrast 17 im Winkelgeber beispielhaft der maximalen Kraft zuordbar. Das mittlere zweite Diagramm zeigt die impulsförmige Auswertung der Spannung in Abhängigkeit eines Drehwinkels α eines Drehstellers eines erfindungsgemäßen Bedienelementes 2. Die ausgewerteten Impulse sind in dem Diagramm als senkrechte Striche eingetragen. Das unterste Diagramm zeigt die Aufteilung eines Winkelgebers in Hauptrasten 17 und Zwischeninkremente 18. Wird nun zu einem Zeitpunkt t1 die Aktuatorik mittels der Auswerteelektronik angesteuert, so blockiert die Blockiereinrichtung 1 die Drehbewegung der Bedieneinheit 2 so dass die Kraft, wie im oberen Diagramm dargestellt stark ansteigt, und der Bediener haptisch eine Rückmeldung erfährt, dass ein Endanschlag erreicht ist. Der Kraftverlauf ist dabei bewusst begrenzt wiedergegeben, da es üblich ist, derartige Drehsteller in Bedieneinheiten mit Rutschkupplungen zu versehen. Die haptische Rückmeldung des Endanschlages liegt dabei aber deutlich über der haptischen Rückmeldung, die der Bediener erfährt, wenn er die Bedieneinheit über die Rasten bewegt.

In dem untersten Diagramm der Figur 5 ist zusätzlich der Verlauf einer analogen Spannung über einen Drehwinkel α wiedergegeben. Derartige Spannungsverläufe sind ebenfalls mittels optoelektronischer Mittel, das heißt mit Sender und Empfänger erzielbar, und können erfindungsgemäß parallel als zusätzliche Winkelgeber in erfindungsgemäßen Bedieneinheiten 2 eingesetzt werden. Durch eine überlagerte Auswertung in der Auswerteelektronik ist aus den Hauptrasten 17, den Inkrementen 18 und dem Spannungsverlauf 21 eine beliebig genaue Auflösung des Winkelgebers beziehungsweise in diesem Beispiel der beiden Winkelgeber ermittelbar. Durch eine derartige erfindungsgemäße Überlagerung von mehreren Winkelmessern und dem Wissen über die Ansteuerung der Spulen im Elektromagnet ist eine sehr genaue Ansteuerung der Blockiereinrichtung in Abhängigkeit der Relativbewegung zur Erzielung einer vorgebbaren Blockierposition ermöglicht.

## Patentansprüche

1. Bedieneinheit (2) für einen Drehsteller in einem Kraftfährzeug, mit einem ersten Teil (8), mit einem relativ zum ersten Teil (8) beweglichen zweiten Teil (3), mit einer Auswerteelektronik, mit mindestens einem Winkelgeber zur Erfassung der Relativbewegung, wobei der Winkelgeber eine Auflösung aufweist und mit der Auswerteelektronik elektrisch verbunden ist, und mit einer Aktuatorik (1) zum mindestens teilweisen Blockieren der Relativbewegung, wobei die Aktuatorik (1) mittels der Auswerteelektronik steuerbar ist, wobei die Auswerteelektronik die Aktuatorik (1) in Abhängigkeit der Relativbewegung steuert, **dadurch gekennzeichnet, dass** bei einer hohen Relativbewegung des zweiten Teils (3) relativ zum ersten Teil (8) die Aktuatorik (1) weit vor und bei einer geringen Relativbewegung kurz vor einer vorgebbaren Blockierposition (20) ansteuert und dass die Auflösung des Winkelgebers ein ganzzahliges Vielfaches der Anzahl der Blockierpositionen ist.

2. Bedieneinheit (2) nach Anspruch 1, **dadurch gekennzeichnet, dass** eine Einrichtung (4) zur Erzeugung einer Rast zwischen dem ersten Teil (8) und dem zweiten Teil (3) befestigt ist.

3. Bedieneinheit (2) nach Anspruch 2, **dadurch gekennzeichnet, dass** jede Rastposition mit einer Blockierposition (20) übereinstimmt.

4. Bedieneinheit (2) nach einem der vorstehenden Ansprüche, **dadurch gekennzeichnet, dass** der Winkelgeber ein inkrementaler Winkelgeber ist.

5. Bedieneinheit (2) nach Anspruch 4, **dadurch gekennzeichnet, dass** der Winkelgeber aus mindestens einer Lichtemissionseinrichtung, mindestens einer Lichtabsorptionseinrichtung und mindestens einer zwischen der Lichtemissions- und Lichtabsorptionseinrichtung befindlichen Blende gebildet ist, die in der Weise angeordnet sind, das eine optoelektronische Erfassung der Relativbewegung detektierbar ist

6. Bedieneinheit (2) nach einem der Ansprüche 4 und 5, **dadurch gekennzeichnet, dass** mittels der optoelektronischen Erfassung eine absolute und/oder inkrementale Erfassung der Relativbewegung erfassbar ist.

7. Bedieneinheit (2) nach einem der vorstehenden Ansprüche, **dadurch gekennzeichnet, dass** die Aktuatorik (1) aus mindestens einer geführten Kugel (7) und mindestens einem der Kugel (7) zugeordneten Elektromagneten (13) gebildet ist, wobei die Kugel (7) durch den Elektromagneten (13) derart zwischen das erste Teil (8) und das zweite Teil (3) verschiebbar ist, dass die Bewegung des zweiten Teiles (3) zumindest teilweise blockiert ist.

## Claims

1. A control unit (2) for a control dial in an automotive vehicle, with a first part (8), with a second part (3), which is movable relative to said first part (8), with an evaluation electronics, with at least one angle transmitter for acquiring the relative movement, said angle transmitter comprising a resolution and being electrically connected to the evaluation electronics, and with actuating elements (1) for at least partially blocking the relative movement, said actuating elements (1) being controllable by means of said evaluation electronics, said evaluation electronics controlling said actuating elements (1) as a function of the relative movement, **characterized in that** the actuating elements (1) trigger a long distance in front of an imposable blocking position (20) in the event of a high relative movement of the second part (3) relative to said first part (8) and a short distance in front of said blocking position in the event of a small relative movement and that the resolution of the angle transmitter is an integer multiple of the number of the blocking positions.

2. The control unit (2) as set forth in claim 1, **characterized in that** a device (4) for generating a detent is fastened between the first part (8) and the second part (3).

3. The control unit (2) as set forth in claim 2, **characterized in that** each detent position coincides with a blocking position (20).

4. The control unit (2) as set forth in any one of the previous claims, **characterized in that** the angle transmitter is an incremental angle transmitter.

5. The control unit (2) as set forth in claim 4, **characterized in that** the angle transmitter is formed from at least one light emission device, at least one light absorption device and at least one diaphragm, which is located between said light emission and said light absorption device, all these elements being disposed for detection of an optoelectronic acquisition of the relative movement.

6. The control unit (2) as set forth in any one of the claims 4 and 5, **characterized in that** an absolute and/or incremental acquisition of the relative movement can be acquired by means of optoelectronic acquisition.

7. The control unit (2) as set forth in any one of the previous claims, **characterized in that** the actuating elements (1) are formed from at least one guided sphere (7) and from at least one electromagnet (13), which is associated with said sphere (7), said sphere (7) being displaceable by the electromagnet (13) between the first part (8) and the second part (3) in such a way that the movement of the second part (3) is at least partially blocked.

## Revendications

1. Unité de commande (2) pour un actionneur rotatif dans un véhicule automobile, avec une première partie (8), avec une deuxième partie (3) mobile relativement à ladite première partie (8), avec une électronique d'évaluation, avec au moins un capteur angulaire destiné à détecter le mouvement relatif, ledit capteur angulaire présentant une résolution et étant connecté électriquement à ladite électronique d'évaluation, et avec un système d'actionnement (1) destiné à bloquer au moins en partie le mouvement relatif, ledit système d'actionnement (1) pouvant être commandé au moyen de l'électronique d'évaluation, ladite électronique d'évaluation commandant le système d'actionnement (1) en fonction du mouvement relatif, **caractérisée par le fait que**, dans le cas d'un mouvement relatif important de la deuxième partie (3) par rapport à la première partie (8), ledit système d'actionnement (1) est commandé bien avant une position de blocage prédéterminable (20) et, dans le cas d'un faible mouvement relatif, peu avant une position de blocage prédéterminable (20), et que la résolution du capteur angulaire est un multiple entier du nombre des positions de blocage.

2. Unité de commande (2) selon la revendication 1, **caractérisée par le fait qu'**un dispositif (4) destiné à créer un encliquetage est fixé entre la première partie (8) et la deuxième partie (3).

3. Unité de commande (2) selon la revendication 2, **caractérisée par le fait que** chaque position d'encliquetage est en concordance avec une position de blocage (20).

4. Unité de commande (2) selon l'une quelconque des revendications précédentes, **caractérisée par le fait que** ledit capteur angulaire est un capteur angulaire incrémentiel.

5. Unité de commande (2) selon la revendication 4, **caractérisée par le fait que** ledit capteur angulaire est constitué par au moins un dispositif d'émission de lumière, par au moins un dispositif d'absorption de lumière et par au moins un diaphragme situé entre lesdits dispositifs d'émission de lumière et d'absorption de lumière, qui sont disposés de manière à ce qu'une détection optoélectronique du mouvement relatif soit détectable.

6. Unité de commande (2) selon l'une quelconque des revendications 4 et 5, **caractérisée par le fait qu'**au moyen de la détection optoélectronique est détectable une détection absolue et/ou incrémentielle.

7. Unité de commande (2) selon l'une quelconque des revendications précédentes, **caractérisée par le fait que** ledit système d'actionnement (1) est constitué par au moins une bille guidée (7) et par au moins un électroaimant (13) associé à ladite bille (7), la bille (7) pouvant être déplacée entre la première partie (8) et la deuxième partie (3) par ledit électroaimant (13) de telle sorte que le mouvement de la deuxième partie (3) est bloqué au moins en partie.
